# EUROPEAN PATENT SPECIFICATION

(11) **EP 1 723 873 B1**
(45) Date of publication and mention of the grant of the patent: **16.07.2008**
(21) Application number: 06114266.7
(22) Date of filing: 19.05.2006
(51) Int. Cl.: A47B 77/02, A47B 47/00, F16B 12/52, F16B 12/44

(54) **Worktop for industrial catering kitchens**
Arbeitsplatte für industrielle Caterings-Küchen
Plan de travail pour les cuisines industrielles de restaurants

(30) Priority: 19.05.2005 IT TO20050342
(43) Date of publication of application: 22.11.2006
(73) Proprietor: Premark FEG L.L.C., Wilmington, Delaware 19801 (US)
(72) Inventor: Lorenzoni, Maurizio, 33045, NIMIS (IT)
(74) Representative: Jorio, Paolo

(56) References cited:
- EP-A- 0 233 387
- FR-A- 2 576 498
- GB-A- 1 441 547
- GB-A- 2 034 177

## Description

The present invention relates to a worktop for industrial catering kitchens.

As known, the kitchens of hotels, canteens, barracks and restaurants require equipment capable of continuously withstanding exasperate use without manifesting reliability problems.

Due to the particularly demanding use for which they are intended, particular manufacturing solutions which do not correspond to those in use in sector of appliances and furniture for domestic use are therefore adopted for appliances and furniture intended for industrial catering.

Worktops for industrial catering kitchens, for example, are normally formed by flat supporting and stiffening frame of essentially rectangular shape arranged at a predetermined height from the ground, by four legs resting on the ground fastened to the flat supporting frame at the four vertexes of the same, and by an upper horizontal top stably fastened to the supporting frame and integrally covering the same. e.g. as disclosed in GB 1441547.

More in detail, the flat frame consists of a rectangular cornice formed by four square section tubular bars made of stainless steel and head-welded one to the other, and by a series of internal stiffening crosspieces which connect together the tubular bars defining the two larger sides of the rectangular, while each of the four legs resting on the ground is formed by a square section tubular bar of stainless steel whose upper end is rigidly fastened to the rectangular cornice by means of screws, rivets or welding.

In addition to the above, the flat frame may also be provided with a rectangular Formica, chipboard or MDF (standing for "Middle Density Fibreboard") panel horizontally fastened over the rectangular metal cornice.

The upper top is instead made of a rectangular stainless steel tray which has four sides of height essentially equal to the thickness of the rectangular cornice and is dimensioned so as to be fitted in reversed position on the rectangular cornice, so as to completely cover it.

Unfortunately, in the worktops described above, the legs resting on the ground are relatively complicated to fasten to the flat frame above, whereby manufacturers prefer to completely assemble the worktop at the manufacturing plant and then to ship to the fully assembled worktop to destination despite the drawbacks that this entails. The large dimensions of the fully assembled worktop indeed considerably effect shipping costs.

It is the object of the present invention to manufacture a worktop for industrial catering kitchens free from the drawbacks illustrated above.

Therefore the present invention relates to the manufacturing of a worktop for industrial catering kitchens comprising a flat supporting frame of essentially rectangular shape and which extends in horizontal position to a pre-established height from the ground, four legs resting on the ground fastened to the flat frame at the four vertexes of the same, and finally an upper horizontal top stably fastened onto the flat supporting frame; said worktop being characterised in that said flat supporting frame comprises a flat plate of essentially rectangular shape which has four side borders appropriately folded so as to define the four lateral sides of the flat frame, and four angular elements which are positioned at the four vertexes of the rectangle defining the external perimeter of the flat plate; each angular element being provided with a resting base which is adapted to be abuttedly arranged on the flat plate at a vertex of the same and to be immovably entrapped underneath the two side borders of the flat plate there converging, and with a fastening hub which overhangingly protrudes from the resting base and is shaped so as to engage by plastic deformation inside an appropriate hole obtained on the upper end of the legs resting on the ground.

The present invention will now be described with reference to the accompanying drawings illustrating a non-limitative embodiment example thereof, in which:
- figure 1 is an exploded perspective view which schematically illustrates a detail of a worktop for industrial catering kitchens manufactured according to the teachings of the present invention;
- figure 2 is a side view of a detail of the worktop shown in figure 1 with parts in section and parts removed for clarity; while
- figure 3 is a sectional view of the detail of the worktop shown in figure 2 taken along section line III-III.

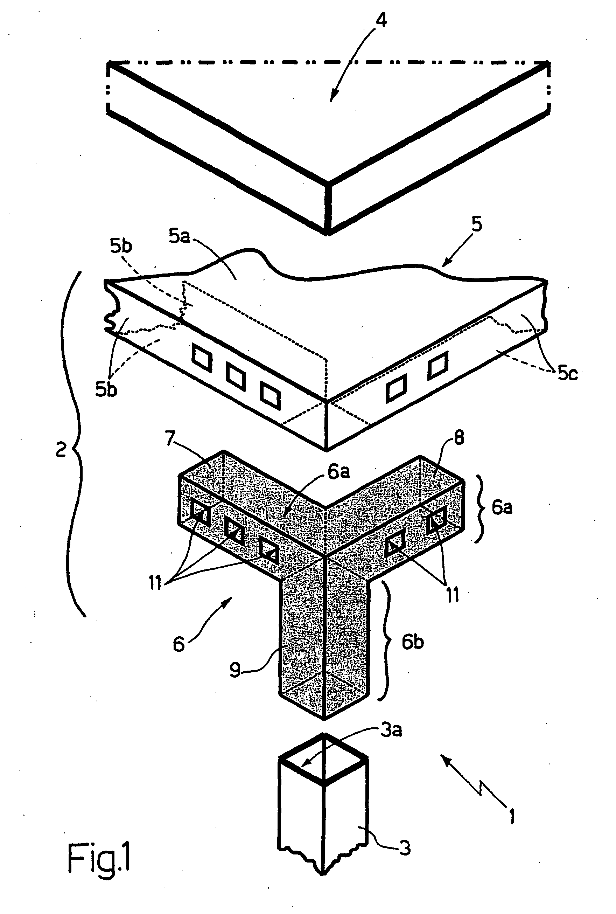

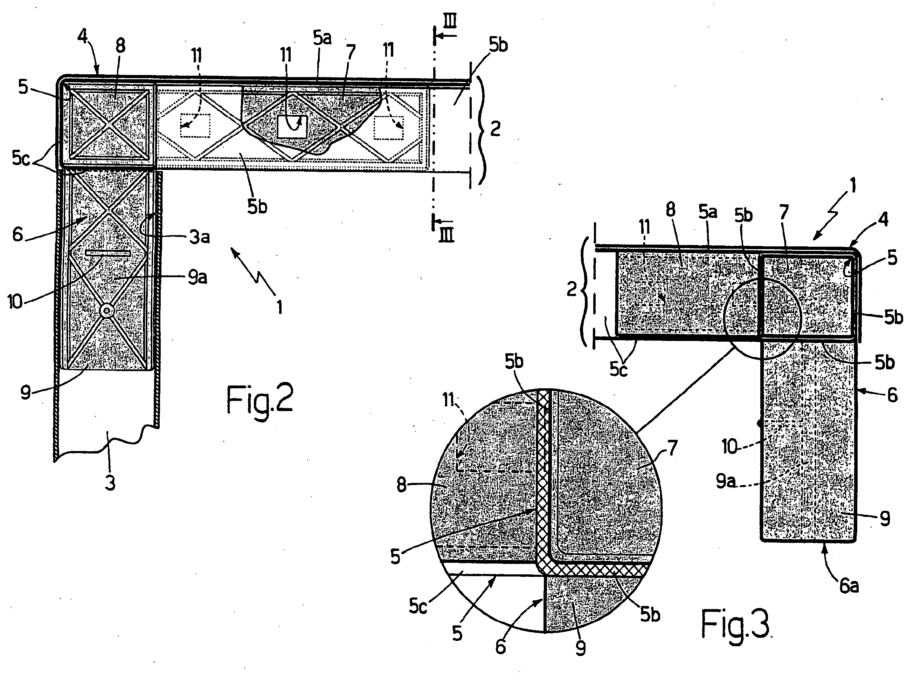

With reference to figures 1, 2 and 3, it is indicated as a whole by 1 a worktop which finds particularly advantageous use in industrial catering kitchens.

The worktop 1 is essentially formed by a flat supporting and stiffening frame 2 of essentially rectangular shape and which is horizontally arranged at a predetermined height from the ground, by four legs 3 resting on the ground fastened to the flat supporting frame 2 at the four vertexes of the same, and finally by an upper horizontal top 4 stably fastened to the supporting frame 2 and integrally covering the same.

Unlike the currently known worktops, the flat frame 2 essentially consists of a flat metal plate 5 of essentially rectangular shape which has four side borders folded in an essentially C-shape or O-shape so as to define the four sides of the flat frame 2, and by four angular elements 6 which are positioned at the four vertexes of the rectangular defining the external perimeter of the flat plate 5, and are entrapped underneath the four side borders of the flat plate 5 so as to be rigidly and immovably fastened to the latter.

More in detail, with reference to figure 1, each angular element 6 is provided with a resting base 6a to the plate which is adapted to be abuttedly arranged on the flat plate 5 at a vertex of the same and to be entrapped underneath the two side borders of the flat plate 5 there converging, and with a fastening hub 6b which overhangingly protrudes from the resting base 6a in a direction essentially perpendicular to the laying plane of the flat frame 2, and is shaped so as to be engaged by plastic deformation inside with an appropriate central hole 3a obtained on the upper end of the legs 3 resting on the ground.

In the example shown, in particular, each of the four legs 3 resting on the ground is essentially formed by a straight square section tubular bar preferably, but not necessarily, of stainless steel, and the fastening hub 6b is adapted to be engaged by plastic deformation inside the central cavity 3a of the square section tubular bar.

Obviously, the four legs 3 resting on the ground may be made of other metallic material.

With reference to figures 1, 2 and 3, the flat metal plate 5 consists of a flat plate which presents a central portion 5a of rectangular shape whose peripheral edge defines the external perimeter of the flat plate 5 and the flat frame 2, and four flat appendixes which overhangingly protrude from the four sides of the central portion 5a and are adapted to be folded on themselves essentially C-shaped or O-shaped so as to define, on the four sides of the central portion 5a, as many boxed stiffening crosspieces of the flat plate 5.

In the example shown, in particular, the two flat appendixes 5b which overhangingly protrude from the two longer sides of the central portion 5a are adapted to be folded on themselves essentially O-shaped so as to form two stiffening crosspieces of essentially square tubular section which define the longer sides of the flat plate 5 and of the flat frame 2, while the two flat appendixes 5c which overhangingly protrude from the two shorter sides of the central portion 5a are adapted to be folded on themselves essentially C-shaped so as to form two boxed C-section stiffening crosspieces which define the shorter sides of the flat plate 5 and of the flat frame 2.

As concerns the four angular elements 6 instead, each of them is formed by three complex section straight beams which overhangingly protrude from a same central nucleus maintaining themselves coaxial to as many essentially and reciprocally orthogonal longitudinal reference axis.

More in detail, two of the three beams of the angular element 6, below indicated by numbers 7 and 8, are arranged according to an L-configuration, extend on the laying plane of the flat frame 2 parallelly to the central portion 5a of the flat plate 5, and are profiled so as to form a flat surface with which the entire angular element 6 is abuttedly arranged on the surface of the central portion 5a of the flat plate 5. In other words, the beams 7 and 8 define the resting base 6a of the angular element 6.

In addition to the above, beam 7 has a transversal section whose shape is complementary to that of the boxed stiffening crosspiece which forms the longer side of the flat plate 5 and of the flat frame 2, and beam 8 has a transversal section whose shape is complementary to that of the boxed stiffening crosspiece which forms the shorter side of the flat plate 5 and of the flat frame 2, so that the two beams 7 and 8 of the angular element 6 may be wrapped and entrapped inside said boxed stiffening crosspieces 5, when the flat appendixes 5b and 5c of the flat plate 5 are folded on themselves by chamfering to form said boxed stiffening crosspieces.

In the example shown, in particular, the beams 7 and 8 have a square section.

With reference to figures 1, 2 and 3, the third beam of the angular element 6, below indicated by number 9, overhangingly protrudes from the joint zone between the two beams 7 and 8, on the opposite side of the flat resting surface of the central portion 5a, and is shaped so as to be engaged by plastic deformation inside the central hole 3a obtained on the upper end of the legs 3 resting on the ground, therefore defining the fastening hub 6b of the angular element 6.

More in detail, in the example shown, beam 9 has an H-transversal section which approximates by excess the dimensions of the central cavity 3a of the square section tubular metallic bar which forms each leg 3, and is further provided with a fastening tongue 10 which protrudes from the central core 9a of the beam 9 in a direction essentially perpendicular to the longitudinal axis of the beam, and has a length so as to locally protrude outside the shape of the beam 9. The tongue 10 is also structured so as to elastically bend when the leg 3 resting on the ground is forcefully keyed onto the beam 9, i.e. to the fastening hub 6b of the angular element 6, and then to drive itself onto the internal surface of the leg 3 so as to rigidly lock the leg 3 on the angular element 6.

In addition to the above, in the example shown, beam 9 extends perpendicularly to the laying plane of the flat frame 2.

With reference to figures 1, 2 and 3, the two beams 7 and 8 which form the resting base 6a of each angular element 6 are finally provided with specific windows or through openings 11 for fastening inside which some portions of the four flat appendixes 5b, 5c of the flat plate 5 are adapted to be wedged by cold plastic deformation.

As concerns the construction material of the angular elements 6 instead, in the example shown, each of them is made by moulding of polyamide resin filled with fibreglass in a percentage by weight comprised between 10% and 50% and preferably, but not necessarily, equal to 30%.

With reference to figures 1, 2 and 3, the horizontal top 4 finally consists of a rectangular tray preferably but not necessarily of stainless steel, which has the four sides of height essentially equal to the thickness of the four boxed stiffening crosspieces of the flat plate 5, i.e. the thickness of the four sides of the flat frame 2, and is dimensioned so as to be fitted on the flat plate 5 in reversed position, so as to cover it completely.

More in detail, in the example shown, the horizontal top 4 is made of stainless steel as the four resting legs 3 on the ground and the flat plate 5, and is fastened to the flat plate 5 by means of a layer of glue interposed between the two elements.

The advantages brought by the worktop 1 described and shown above are evident: the flat supporting frame 2 is obtained from a simple flat stainless steel plate or other metallic material by means of a series of cold pressing and bending operations, with considerably reduced manufacturing costs with respect to the current solutions.

The particular structure of the flat frame 2 also offers the possibility of fitting the legs 3 resting on the ground directly in the place of use extremely rapidly and without the need for particular tools, thus allowing to considerably reduce shipping costs.

It is finally apparent that changes and variants can be made to the worktop 1 described and shown here without departing from the scope of the present invention.

## Claims

1. A worktop (1) for industrial catering kitchens comprising a flat supporting frame (2) whose shape is essentially rectangular and extends in horizontal position to a pre-established height from the ground, four legs (3) resting on the ground fastened to the flat frame (2) at the four vertexes of the same, and finally an upper horizontal top (4) stably fastened onto the flat supporting frame (2); said worktop (1) being **characterised in that** said flat supporting frame (2) comprises a flat plate (5) of essentially rectangular shape which has four side borders (5b, 5c) appropriately folded so as to define the four lateral sides of the flat frame (2), and four angular elements (6) which are positioned at the four vertexes of the rectangle defining the external perimeter of the flat plate (5); each angular element (6) being provided with a resting base (6a) which is adapted to be abuttedly arranged on the flat plate (5) at a vertex of the same and to be immovably entrapped underneath the two side borders (5b, 5c) of the flat plate (5) there converging, and with a fastening hub (6b) which overhangingly protrudes from the resting base (6a) and is shaped so to engage by plastic deformation inside a provided hole (3a) obtained on the upper end of the legs (3) resting on the ground.

2. A worktop according to claim 1, **characterised in that** said flat plate (5) comprises a central portion (5a) of essentially rectangular shape whose peripheral edge defines the external perimeter of said flat frame (2), and by four flat appendixes (5b, 5c) which overhangingly protrude from the four sides of said central portion (5a) and which are folded on themselves essentially C-shaped or O-shaped so as to define, on the four sides of said central portion (5a), as many boxed stiffening crosspieces which form the side shells of said flat frame (2).

3. A worktop according to claim 2, **characterised in that** at least one said angular element (6) comprises a first (7), a second (8) and a third complex section straight beam (9) which overhangingly protrude from a same central nucleus maintaining themselves coaxial to as many reciprocally substantially orthogonally longitudinal reference axes; said first (7) and second beam (8) being arranged according to an L-configuration so as to be abuttedly arranged on the central portion (5a) of the flat plate (5), and being also adapted to be wrapped and entrapped by chamfering inside said boxed stiffening crosspieces which form the side shells of said flat frame (2) when the flat appendixes (5b, 5c) of said flat plate (5) are folded on themselves to form said boxed stiffening crosspieces.

4. A worktop according to claim 3, **characterised in that** said third beam (9) overhangingly protrudes from the joint zone between said first (7) and second beam (8) on the opposite side of the central portion (5a), and is shaped so to engage by plastic deformation inside the hole (3a) on the upper end of said leg (3) resting on the ground.

5. A worktop according to claim 4, **characterised in that** said third beam (9) of the angular element (6) has a cross section which approximates by excess the dimensions of the hole (3a) obtained on the upper end of said leg (3) resting on the ground.

6. A worktop according to claim 4 or 5, **characterised in that** said third beam (9) of the angular element (6) is provided with a fastening tongue (10) which protrudes locally outside the contour of the third beam (9) and is structured so to bend elastically when the leg (3) is forcefully keyed onto the third beam (9), to then drive itself onto the internal surface of said leg (3) so as to rigidly lock it in position.

7. A worktop according to any preceding claim, **characterised in that** at least one said leg (3) resting on the ground is formed by a tubular bar (3) of square section metal.

8. A worktop according to claim 7, **characterised in that** said tubular bar (3) of square section metal is made of stainless steel.

9. A worktop according to any preceding claim, **characterised in that** said horizontal top (4) comprises a tray (4) of essentially rectangular shape which has four sides of height essentially equal to the thickness of the four boxed stiffening crosspieces of the flat plate (5), and is dimensioned so as to be keyed onto said flat plate (5) in reversed position.

10. A worktop according to claim 9, **characterised in that** said tray (4) is made of stainless steel.

11. A worktop according to any preceding claim, **characterised in that** at least one said angular element (6) is made of plastic material.

12. A worktop according to claim 11, **characterised in that** said angular element (6) is made by moulding of glass fibre filled polyamide resin.

## Patentansprüche

1. Arbeitsplatte (1) für Großküchen mit einem flachen Stützrahmen (2), der im Wesentlichen rechteckig ist und sich in horizontaler Position zu einer vorbestimmten Höhe vom Boden erstreckt, vier Beinen (3), die auf dem Boden stehen und an den vier Ecken des flachen Rahmens (2) an diesem befestigt sind, und schließlich einer oberen horizontalen Platte (4), die stabil auf dem flachen Stützrahmen (2) befestigt ist, wobei die Arbeitsplatte (1) **dadurch gekennzeichnet ist, dass** der flache Stützrahmen (2) eine flache, im Wesentlichen rechteckige Platte (5) mit vier Seitenrändern (5b, 5c), die angemessen geklappt sind, um die vier lateralen Seiten des flachen Rahmens (2) zu bilden, und vier winkelförmige Elemente (6) aufweist, die an den vier Ecken des den Außenumfang der flachen Platte (5) definierenden Rechtecks positioniert sind, wobei jedes winkelförmige Element (6) mit einer Aufliegebasis (6a), die geeignet ist, anschlagmäßig an der flachen Platte (5) an einer ihrer Ecken angeordnet zu werden und unter den beiden Seitenrändern (5b, 5c) der flachen Platte (5), die dort zusammenlaufen, unbeweglich gefangen zu sein, und mit einer Befestigungsnabe (6b) versehen ist, die von der Aufliegebasis (6a) überhängend vorsteht und so geformt ist, dass sie durch plastische Verformung in ein vorgesehenes Loch (3a) eingreift, das sich am oberen Ende der auf dem Boden stehenden Beine (3) befindet.

2. Arbeitsplatte nach Anspruch 1, **dadurch gekennzeichnet, dass** die flache Platte (5) einen im Wesentlichen rechteckigen mittleren Abschnitt (5a) aufweist, dessen Umfangsrand den Außenumfang des flachen Rahmens (2) definiert, und durch vier flache Fortsätze (5b, 5c), die von den vier Seiten des mittleren Abschnitts (5a) überhängend vorstehen und im Wesentlichen C-förmig oder 0-förmig umgeklappt sind, um an den vier Seiten des mittleren Abschnitts (5a) die gleiche Anzahl Einbau-Versteifungsquerstücke zu definieren, die die Seitenschalen des flachen Rahmens (2) bilden.

3. Arbeitsplatte nach Anspruch 2, **dadurch gekennzeichnet, dass** mindestens ein winkelförmiges Element (6) einen ersten (7), einen zweiten (8) und einen dritten geraden Balken (9) mit komplexem Querschnitt aufweist, die von demselben mittleren Kern überhängend vorstehen und sich zur gleichen Anzahl gegenseitig im Wesentlichen orthogonaler Längsbezugsachsen koaxial halten, wobei der erste (7) und der zweite Balken (8) in einer L-Konfiguration angeordnet sind, so dass sie anschlagsmäßig am mittleren Abschnitt (5a) der flachen Platte (5) angeordnet sind, und auch geeignet sind, in den Einbau-Versteifungsquerstücken eingeschlossen und durch Abfasen gefangen zu sein, die die Seitenschalen des flachen Rahmens (2) bilden, wenn die flachen Fortsätze (5b, 5c) der flachen Platte (5) umgeklappt sind und die Einbau-Versteifungsquerstücke bilden.

4. Arbeitsplatte nach Anspruch 3, **dadurch gekennzeichnet, dass** der dritte Balken (9) von der Fugenzone zwischen dem ersten (7) und dem zweiten Balken (8) auf der gegenüberliegenden Seite des mittleren Abschnitts (5a) überhängend vorsteht und so geformt ist, dass er durch plastische Verformung in das Loch (3a) eingreift, das sich am oberen Ende des auf dem Boden stehenden Beins (3) befindet.

5. Arbeitsplatte nach Anspruch 4, **dadurch gekennzeichnet, dass** der dritte Balken (9) des winkelförmigen Elements (6) einen Querschnitt hat, der etwas größer ist als die Abmessungen des Lochs (3a), das sich am oberen Ende des auf dem Boden stehenden Beins (3) befindet.

6. Arbeitsplatte nach Anspruch 4 oder 5, **dadurch gekennzeichnet, dass** der dritte Balken (9) des winkelförmigen Elements (6) mit einer Befestigungszunge (10) versehen ist, die örtlich außen von der Kontur des dritten Balkens (9) vorsteht und so konfiguriert ist, dass sie sich elastisch biegt, wenn das Bein (3) hart auf den dritten Balken (9) verkeilt wird, und sich anschließend auf die Innenfläche des Beins (3) schiebt, um es starr in seiner Position zu arretieren.

7. Arbeitsplatte nach einem der vorhergehenden Ansprüche, **dadurch gekennzeichnet, dass** mindestes ein auf dem Boden stehendes Bein (3) durch eine rohrförmige Stange (3) aus Metall mit quadratischem Querschnitt gebildet ist.

8. Arbeitsplatte nach Anspruch 7, **dadurch gekennzeichnet, dass** die rohrförmige Stange (3) aus Metall mit quadratischem Querschnitt aus Edelstahl hergestellt ist.

9. Arbeitsplatte nach einem der vorhergehenden Ansprüche, **dadurch gekennzeichnet, dass** die horizontale Platte (4) eine im Wesentlichen rechteckige Schale (4) mit vier Seiten umfasst, deren Höhe der Dicke der vier Einbau-Versteifungsquerstücke der flachen Platte (5) im Wesentlichen entspricht, wobei die Platte (4) so bemessen ist, dass sie in umgekehrter Position auf die flache Platte (5) verkeilt wird.

10. Arbeitsplatte nach Anspruch 9, **dadurch gekennzeichnet, dass** die Schale (4) aus Edelstahl hergestellt ist.

11. Arbeitsplatte nach einem der vorhergehenden Ansprüche, **dadurch gekennzeichnet, dass** mindestens ein winkelförmiges Element (6) aus Kunststoffmaterial hergestellt ist.

12. Arbeitsplatte nach Anspruch 11, **dadurch gekennzeichnet, dass** das winkelförmige Element (6) durch Formen von glasfasergefülltem Polyamidharz hergestellt wird.

## Revendications

1. Plan de travail (1) pour cuisines de restauration industrielle comportant une armature plate (2) de soutien de forme essentiellement rectangulaire s'étendant en position horizontale jusqu'à une hauteur préétablie par rapport au sol, quatre pieds (3) reposant sur le sol et fixés à l'armature plate (2) aux quatre sommets de celle-ci, et enfin un plan horizontal supérieur (4) fixé de façon stable à l'armature plate (2) de soutien ; ledit plan de travail (1) étant **caractérisé en ce que** ladite armature plate (2) de soutien comporte une plaque plate (5) de forme essentiellement rectangulaire dotée de quatre bordures latérales (5b, 5c) repliées de façon appropriée de façon à définir les quatre côtés latéraux de l'armature plate (2), et quatre éléments angulaires (6) positionnés aux quatre sommets du rectangle définissant le périmètre extérieur de la plaque plate (5) ; chaque élément angulaire (6) étant pourvu d'une embase (6a) d'appui prévue pour être agencée en butée sur la plaque plate (5) au niveau d'un sommet de celle-ci et pour être piégée de façon immobile sous les deux bordures latérales (5b, 5c) de la plaque plate (5) qui y convergent, et d'un moyeu (6b) de fixation saillant en porte-à-faux de l'embase (6a) d'appui et présentant une forme lui permettant de s'enclencher par déformation plastique à l'intérieur d'un trou (3a) pratiqué sur l'extrémité supérieure des pieds (3) reposant sur le sol.

2. Plan de travail selon la revendication 1, **caractérisé en ce que** ladite plaque plate (5) comporte une partie centrale (5a) de forme essentiellement rectangulaire dont le bord périphérique définit le périmètre extérieur de ladite armature plate (2), et par quatre appendices plats (5b, 5c) saillant en porte-à-faux des quatre côtés de ladite partie centrale (5a) et repliés sur eux-mêmes essentiellement en C ou en 0 de façon à définir, sur les quatre côtés de ladite partie centrale (5a), autant de traverses raidisseuses en caissons qui forment les coques latérales de ladite armature plate (2).

3. Plan de travail selon la revendication 2, **caractérisé en ce qu'**au moins un desdits éléments angulaires (6) comporte une première (7), une deuxième (8) et une troisième poutre droite (9) de section complexe saillant en porte-à-faux d'un même noyau central en se maintenant coaxiales à autant d'axes de référence sensiblement orthogonalement et réciproquement longitudinaux ; lesdites première (7) et deuxième poutre (8) étant agencées selon une configuration en L de façon à être agencées en butée sur la partie centrale (5a) de la plaque plate (5), et étant également prévues pour être enveloppées et piégées par des chanfreins à l'intérieur desdites traverses raidisseuses en caissons qui forment les coques latérales de ladite armature plate (2) lorsque les appendices plats (5b, 5c) de ladite plaque plate (5) sont repliés sur eux-mêmes pour former lesdites traverses raidisseuses en caissons.

4. Plan de travail selon la revendication 3, **caractérisé en ce que** ladite troisième poutre (9) saille en porte-à-faux de la zone de raccord entre ladite première (7) et ladite deuxième poutre (8) du côté opposé de la partie centrale (5a), et présente une forme lui permettant de s'enclencher par déformation plastique à l'intérieur du trou (3a) pratiqué sur l'extrémité supérieure dudit pied (3) reposant sur le sol.

5. Plan de travail selon la revendication 4, **caractérisé en ce que** ladite troisième poutre (9) de l'élément angulaire (6) présente une section droite approchant par excès les dimensions du trou (3a) pratiqué sur l'extrémité supérieure dudit pied (3) reposant sur le sol.

6. Plan de travail selon la revendication 4 ou 5, **caractérisé en ce que** ladite troisième poutre (9) de l'élément angulaire (6) est pourvue d'une languette (10) de fixation saillant localement à l'extérieur du contour de la troisième poutre (9) et structurée de façon à fléchir élastiquement lorsque le pied (3) est enfilé à force sur la troisième poutre (9), pour s'appliquer ensuite sur la surface interne dudit pied (3) de façon à le bloquer en position de manière rigide.

7. Plan de travail selon l'une quelconque des revendications précédentes, **caractérisé en ce qu'**au moins un desdits pieds (3) reposant sur le sol est formé d'une barre tubulaire (3) de métal à section carrée.

8. Plan de travail selon la revendication 7, **caractérisé en ce que** ladite barre tubulaire (3) de métal à section carrée est constituée d'acier inoxydable.

9. Plan de travail selon l'une quelconque des revendications précédentes, **caractérisé en ce que** ledit plan horizontal (4) comporte un plateau (4) de forme essentiellement rectangulaire présentant quatre côtés de hauteur essentiellement égale à l'épaisseur des quatre traverses raidisseuses en caissons de la plaque plate (5) et dimensionné de façon à être enfilé sur ladite plaque plate (5) en position inversée.

10. Plan de travail selon la revendication 9, **caractérisé en ce que** ledit plateau (4) est constitué d'acier inoxydable.

11. Plan de travail selon l'une quelconque des revendications précédentes, **caractérisé en ce qu'**au moins un desdits éléments angulaires (6) est constitué de matière plastique.

12. Plan de travail selon la revendication 11, **caractérisé en ce que** ledit élément angulaire (6) est fabriqué par moulage de résine polyamide chargée de fibre de verre.
